# EUROPÄISCHE PATENTSCHRIFT

(11) **EP 0 757 517 B1**
(45) Veröffentlichungstag und Bekanntmachung des Hinweises auf die Patenterteilung: **28.10.1998**
(21) Anmeldenummer: 95908864.2
(22) Anmeldetag: 24.02.1995
(51) Int. Cl.: A01G 9/14, E04C 2/54

(54) **LICHTDURCHLÄSSIGE STEGPLATTE**
TRANSPARENT DOUBLE-PANE INSULATION UNIT
PANNEAU TRANSLUCIDE A ENTRETOISES

(30) Priorität: 28.02.1994 CH 587/94
(43) Veröffentlichungstag der Anmeldung: 12.02.1997
(73) Patentinhaber: Schwarz, Dietrich, 7000 Chur (CH)
(72) Erfinder: Schwarz, Dietrich, 7000 Chur (CH)
(74) Vertreter: Münch, Otto
(86) Internationale Anmeldenummer: CH9500041
(87) Internationale Veröffentlichungsnummer: WO9522886

(56) Entgegenhaltungen:
- EP-A- 0 054 856
- EP-A- 0 109 388
- EP-A- 0 150 534
- EP-A- 0 477 687
- WO-A-84/01687
- DE-A- 3 704 906
- DE-U- 9 205 226
- FR-A- 2 508 555

## Beschreibung

Lichtdurchlässige Stegplatten aus Kunststoff sind bekannt zur Isolation von Gewächshäusern oder Frühbeeten. Sie haben zwei in geringem Abstand voneinander angeordnete transparente Scheiben, welche durch mehrere Stege miteinander verbunden sind. Bei vertikalen Wänden verlaufen die Stege vertikal, damit allenfalls sich bildendes Kondenswasser abläuft.

In der EP-A-54 856 ist eine Stegplatte beschrieben, welche im Querschnitt als Gitterträger ausgebildet ist. Jeweils zwei Stege sind an der gleichen Stelle einer Scheibe befestigt. In einer Ausführungsform wechseln sich senkrecht zur Ebene der Scheiben stehende mit um 45° geneigten Stegen ab. Mit dieser Ausbildung soll eine bessere Steifigkeit der Stegplatte quer zu deren Längserstreckung erreicht werden. Die geneigten Stege sind breiter als der Abstand benachbarter Stege voneinander.

Der vorliegenden Erfindung liegt die Aufgabe zugrunde, die Wärmedämmung solcher Stegplatten zu verbessern. Diese Aufgabe wird durch die Merkmalskombination der Ansprüche gelöst.

Dadurch, dass die Stege wesentlich breiter sind als der Abstand benachbarter Stege voneinander, und dass die Stege im eingebauten Zustand horizontal sind, wird die Konvektion in den Hohlräumen zwischen den Stegen drastisch reduziert. Dadurch ermöglicht die erfindungsgemässe Stegplatte eine erheblich bessere Wärmedämmung als herkömmliche Stegplatten.

Nachfolgend werden Ausführungsbeispiele der Erfindung anhand der Zeichnung erläutert. Darin zeigt:
- Figur 1: Einen Vertikalschnitt durch eine Stegplatte, montiert an einer vertikalen Wand,
- Figuren 2 und 3: zwei weitere Ausführungsformen der Stegplatte, und
- Figuren 4 und 5: eine vierte Ausführungsform.

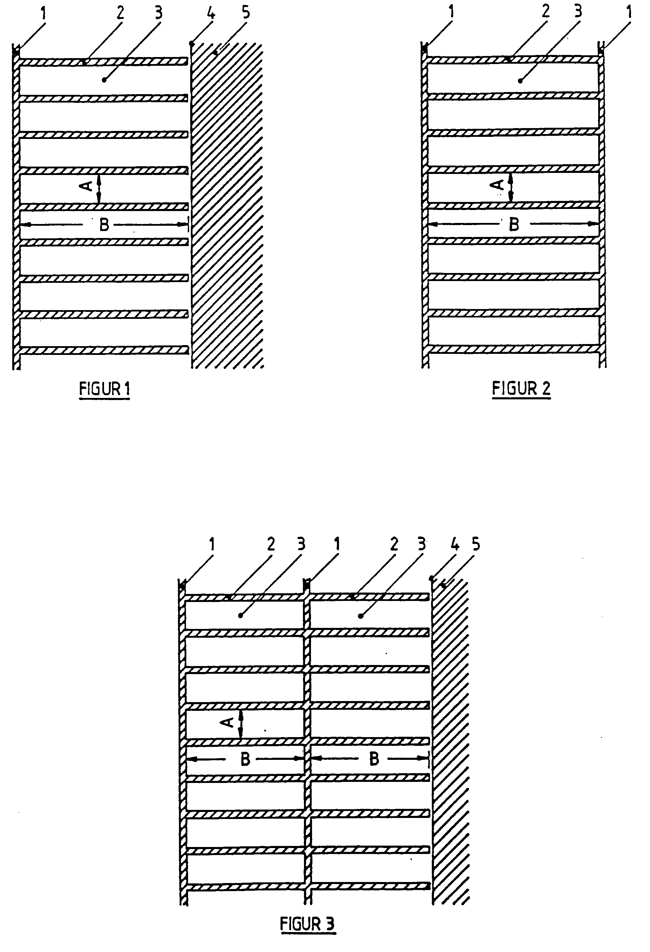

Die Stegplatte nach Figur 1 hat eine transparente Scheibe 1, von der eine Vielzahl von Stegen 2 absteht. Die Breite B der Stege ist wesentlich grösser als der Abstand A benachbarter Stege voneinander. Vorzugsweise beträgt die Breite B 40-200 mm. Die Stegplatte wird mit möglichst geringem Abstand der freien Ränder der Stege 2 von einer Wand 5 montiert, deren Aussenseite 4 mit einem lichtabsorbierendem Material beschichtet, z.B. schwarz gefärbt ist. Im eingebauten Zustand verläuft die Längserstreckung der Stege 2 horizontal. Weil in den flachen, horizontal angeordneten Hohlräumen 3 zwischen den Stegen 2 Konvektion kaum möglich ist, wird eine sehr gute Wärmedämmung erreicht. Der Stegabstand A sollte so gross sein, dass ein Optimum an minimaler Advektion und eine minimale Anzahl Stege 2 erreicht wird, damit durch die Stegplatte der Wärmedurchgang minimal und der Gesamtenergiedurchlassgrad maximal ist. Damit der Gesamtenergiedurchlassgrad maximal ist, muss überdies die Stegplatte mit der statisch minimal notwendigen Scheibenzahl ausgebildet werden. Daher wird bei der Ausführungsform nach Figur 1 auf der Innenseite der Stegplatte auf eine abschliessende Scheibe verzichtet. Die Stegplatte kann aus transparentem Kunststoff oder aus Glas bestehen. Vorzugsweise wird sie einstückig extrudiert.

Bei der Ausführungsform nach Figur 2 sind die Stege 2 beidseitig an je eine Scheibe 1 angeformt, die Hohlräume 3 also geschlossen. Diese Ausführungsform eignet sich sowohl zur Isolation einer Wand als auch zur Tageslichtbeleuchtung von Räumen, z.B. für Gewächshäuser. Bei der Ausführungsform nach Figur 3 sind an der inneren Scheibe 1 weitere Stege 2 mit gleichen Dimensionen wie bei der Ausführungsform nach Figur 1 angeformt.

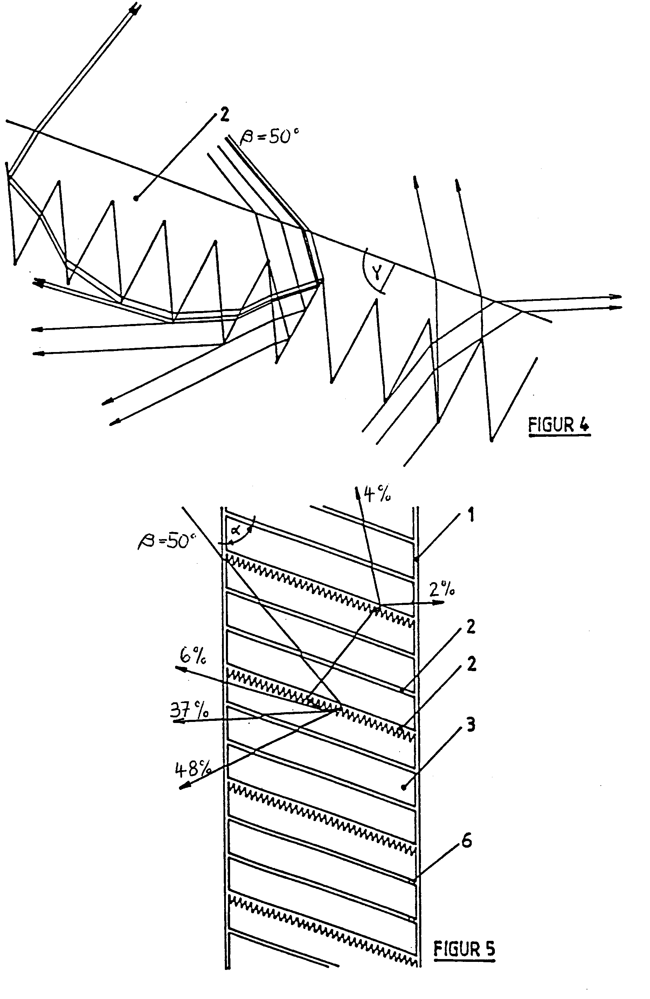

Gemäss der Ausführungsform nach Figuren 4 und 5 können die Stege 2 einen spitzen Winkel α mit der Scheibe 1 bilden. Der Winkel α wird so gewählt, dass bei nach Süden ausgerichteter Fassade die Sonneneinstrahlrichtung im Winter etwa parallel zur Stegebene verläuft. Einige der Stege 2 haben auf der Unterseite einen sägezahnförmigen, d.h. einen periodisch prismatisch geformten Querschnitt. Dadurch wird erreicht, dass im Sommerquartal, bei hohem Sonnenstand und einem Einfallswinkel β der Sonnenstrahlen von z.B. 50° der grösste Teil der einfallenden Strahlung durch Lichtbrechung nach aussen umgelenkt wird. Dadurch ist eine Abschattung der Stegplatte oder der Wand 5 im Sommer nicht erforderlich. Durch den Winkel α der Stege kann bestimmt werden, mit welchem Einfallswinkel β die Sonnenstrahlen in die Stegplatte ungehindert durchdringen. Demzufolge werden sie den Einfallswinkeln während der Heizperiode entsprechend ausgerichtet. Durch die Winkel γ der Prismen, welche auf den Stegen angeordnet sind, kann gemäss Figur 4 bestimmt werden, wie stark die Sonnenstrahlen pro Steg 2 umgelenkt werden. Diese sägezahnförmige Begrenzung kann sehr fein sein. Dies hat zur Folge, dass kaum Querschnittsschwächungen der Stege 2 entstehen. Insgesamt kann durch den Abstand A, den Winkel α, den Winkel γ der Prismen und den Brechnungsindex des Materials bestimmt werden, mit welchen Einfallswinkeln β die Sonnenstrahlen die Stegplatte durchdringen und ab welchem Einfallswinkel β die Sonnenstrahlen in der Stegplatte teilweise und ab welchem Einfallswinkel β nahezu total wieder nach aussen umgelenkt werden (Figur 5). Dadurch ist es möglich, die Stegplatte optimal auszulegen.

Die Lichtbrechung und somit die Umlenkung der Sonnenstrahlen bei hohem Sonnenstand nach aussen kann auch durch einen einseitig prismatischen Querschnitt der Scheiben 1 erreicht werden.

Damit Kondenswasser, das in der Stegplatte entsteht, trotz horizontaler Anordnung der Stege abfliessen kann, können die Stege 2 an ihrem unteren Rand Durchbrüche 6 aufweisen. Daher ist es sinnvoll, die Stege 2 auch dann leicht zu neigen, wenn sie nicht direkter Sonnenbestrahlung ausgesetzt sind. Durch Beschichtungen, welche die Kondenswassertropfenbildung auf der gesamten Oberfläche der Stegplatte durch Spreitung des Kondenswassers verhindern, kann die Lichtreflektion gemindert werden. Dies hat eine Erhöhung des Gesamtenergiedurchlassgrades zur Folge.

Wie aus den Zeichnungen hervorgeht, beträgt das Verhaltnis von Breite B zum Abstand A benachbarter Stege 2 voneinander bei der Ausführungsform nach Fig. 3 etwa 4:1. Bei den andern Ausführungsformen ist dieses Verhältnis grösser.

## Patentansprüche

1. Lichtdurchlässige Stegplatte, umfassend mindestens eine transparente Scheibe (1), von der eine Vielzahl von Stegen (2) absteht, wobei das Verhältnis der Breite (B) der Stege (2) zum Abstand (A) benachbarter Stege (2) voneinander mindestens 4:1 beträgt.

2. Stegplatte nach Anspruch 1, wobei die Breite (B) der Stege (2) grösser als 40 mm ist.

3. Stegplatte nach Anspruch 1 oder 2, wobei die Stege (2) zwischen zwei zueinander parallelen transparenten Scheiben (1) angeordnet sind.

4. Stegplatte nach Anspruch 3, wobei von der einen, der zu isolierenden Wand (5) zugekehrten Scheibe (1) weitere Stege (2) mit einer Breite (B) grösser als der Stegabstand (A) abstehen.

5. Stegplatte nach einem der Ansprüche 1-4, wobei die Ebenen sämtlicher Stege (2) parallel zueinander verlaufen.

6. Stegplatte nach Anspruch 5, wobei die Stege (2) mit der Scheibe (1) bzw. den Scheiben (1) einen spitzen Winkel (α) bilden.

7. Stegplatte nach einem der Ansprüche 1-6, wobei mehrere Stege (2) auf einer Seite einen sägezahnförmigen Querschnitt haben.

8. Stegplatte nach einem der Ansprüche 1-7, wobei die bzw. mindestens eine Scheibe oder Abschnitte davon auf einer Seite einen sägezahnförmigen Querschnitt hat.

9. Stegplatte nach einem der Ansprüche 1-8, wobei die Stege (2) Durchbrüche (6) zur Ableitung von Kondenswasser haben.

10. Verwendung einer Stegplatte nach einem der Ansprüche 1-9 zur Isolation eines Gebäudes, wobei die Längsrichtung der Stege (2) im eingebauten Zustand horizontal verläuft.

## Claims

1. Light-transparent web plate, comprising at least one transparent pane (1), from which project a plurality of webs (2), wherein the ratio of the width (B) of the webs (2) to the distance (A) between neighbouring webs (2) is at least 4:1.

2. Web plate according to claim 1, wherein the width (B) of the webs (2) is greater than 40 mm.

3. Web plate according to claim 1 or 2, wherein the webs (2) are arranged between two mutually parallel transparent panes (1).

4. Web plate according to claim 3, wherein further webs (2) having a width (B) greater than the web spacing (A) project from that one of the panes (1) which faces the wall (5) to be insulated.

5. Web plate according to one of claims 1 to 4, wherein the planes of all the webs (2) are parallel to each other.

6. Web plate according to one of claims 1 to 5, wherein the webs (2) form an acute angle (α) with the pane (1) or the panes (1) respectively.

7. Web plate according to one of claims 1 to 6, wherein several webs (2) have on one side a saw-tooth shaped cross section.

8. Web plate according to one of claims 1 to 7, wherein the pane, or at least one pane or portions thereof, has or have on one side a saw-tooth shaped cross section.

9. Web plate according to one of claims 1 to 8, wherein the webs (2) have openings (6) for the drainage of condensed water.

10. Use of a web plate according to one of claims 1 to 9 for the insulation of a building, wherein the longitudinal extension of the webs (2) in the built-in state extends horizontally.

## Revendications

1. Panneau transparent à entretoises, comprenant au moins une plaque transparente (1), sur laquelle font saillie une multiplicité d'entretoises (2), le rapport de la largeur (B) des entretoises (2) à la distance réciproque (A) d'entretoises voisines (2) est égal à au moins 4:1.

2. Panneau à entretoises selon la revendication 1, dans lequel la largeur (B) des entretoises (2) est supérieure à 40 mm.

3. Panneau à entretoises selon la revendication 1 ou 2, dans lequel les entretoises (2) sont disposées entre deux plaques transparentes parallèles (1).

4. Panneau à entretoises selon la revendication 3, dans lequel d'autres entretoises (2) ayant une largeur (B) supérieure à la distance réciproque (A) des entretoises font saillie sur une plaque (1) tournée vers la paroi (5) à isoler.

5. Panneau à entretoises selon l'une des revendications 1-4, dans lequel les plans de toutes les entretoises (2) sont parallèles entre eux.

6. Panneau à entretoises selon la revendication 5, dans lequel les entretoises (2) font un angle aigu (α) avec la plaque (1) ou les plaques (1).

7. Panneau à entretoises selon l'une des revendications 1-6, dans lequel plusieurs entretoises (2) situées d'un côté possèdent une section transversale en dents de scie.

8. Panneau à entretoises selon l'une des revendications 1-7, dans lequel la ou au moins une plaque ou des parties de la ou des plaques possèdent, d'un côté, une section transversale en dents de scie.

9. Panneau à entretoises selon l'une des revendications 1-8, dans lequel les entretoises (2) comportent des passages (6) servant à évacuer l'eau de condensation.

10. Utilisation d'un panneau à entretoises selon l'une des revendications 1-9 pour l'isolation d'un bâtiment, la direction longitudinale des entretoises (2) à l'état monté étant horizontale.
